# EUROPÄISCHE PATENTSCHRIFT

(11) **EP 2 406 182 B1**
(45) Veröffentlichungstag und Bekanntmachung des Hinweises auf die Patenterteilung: **10.05.2017**
(21) Anmeldenummer: 10709819.6
(22) Anmeldetag: 11.03.2010
(51) Int. Cl.: C01B 33/14, C08J 3/03, C08K 3/22, C09C 1/30

(54) **VERFAHREN ZUR HERSTELLUNG VON SILICA-HALTIGEN DISPERSIONEN ENTHALTEND POLYETHEROLE ODER POLYETHERAMINE**
A PROCESS FOR THE PREPARATION OF SILICA-CONTAINING DISPERSIONS CONTAINING POLYETHER ALCOHOLS OR POLYETHER AMINES
PROCÉDÉ DE FABRICATION DE DISPERSIONS CONTENANT DE LA SILICE, CONTENANT DES POLYÉTHÉROLS OU DES POLYÉTHERAMINES

(30) Priorität: 13.03.2009 EP 09155131
(43) Veröffentlichungstag der Anmeldung: 18.01.2012
(73) Patentinhaber: BASF SE, 67056 Ludwigshafen am Rhein (DE)
(72) Erfinder: ELING, Berend, 49448 Lemförde (DE); TOMOVIC, Zeljko, 49448 Lemförde (DE); AUFFARTH, Stefan, 49492 Westerkappeln (DE)
(74) Vertreter: BASF IP Association
(86) Internationale Anmeldenummer: PCT/EP2010/053106
(87) Internationale Veröffentlichungsnummer: WO 2010/103072

(56) Entgegenhaltungen:
- EP-A1- 1 236 765
- WO-A1-01/05883
- WO-A2-2005/056174

## Beschreibung

Die Erfindung betrifft ein Verfahren zur Herstellung von Silica-haltigen Dispersionen enthaltend Polyetherole oder Polyetheramine und deren Verwendung zur Herstellung von Polyurethanwerkstoffen.

Es ist bekannt, dass durch die Gegenwart von Nanopartikeln in den Komponenten von Polyurethanwerkstoffen (Isocyanat- oder Polyolkomponente) die mechanischen Eigenschaften der Polyurethanwerkstoffe gezielt beeinflusst werden können.

So ist aus DE-A 103 38 164 ein Verfahren zur Herstellung eines Polyurethanschaumes umfassend die Umsetzung eines Polyisocyanats und eines Polyols in Gegenwart von einem Treibmittel und von Kieselgelteilchen bekannt, wobei die Kieselgelteilchen mit Aminopropyltriethoxysilan funktionalisiert sind. Durch das Silanisierungsreagenz wird eine Hydrophilierung der Teilchenoberfläche der Kieselgelteilchen bewirkt, wobei diese hydrophile Oberfläche gegenüber Isocyanat reaktive Oberflächengruppen aufweist. Dadurch werden die Teilchen während der Polymerisationsreaktion zum Polyurethanschaum kovalent in die Polymermatrix des Schaums eingebaut und wirken als Verstärkungsmittel. Dadurch kann die Offenzelligkeit des Polyurethanschaums reguliert werden, was zu einer Verbesserung der akustischen Eigenschaften (Schalldämpfung) und der Wärmeisolierfähigkeit des Polyurethanschaums führen kann. Die Oberflächen-funktionalisierten SiO₂-Partikel werden in die Polyolkomponente eingearbeitet. Die SiO₂-Partikel werden vorzugsweise ausgehend von Tetraethoxysilan in einem organischen Lösungsmittel hergestellt. Diese Syntheseroute ist kostenintensiv, da ein teurer Precursor eingesetzt wird, und außerdem die Teilchenausbeute der Synthese niedrig ist. Weiterhin liefert diese Synthese Teilchen mit einer Größe von 100 nm oder größer, welche als herkömmliche Füllstoffe anzusehen sind.

EP-A 1 366 112 offenbart ein Verfahren zur Herstellung einer Siliciumdioxid-Dispersion durch a) Vorlegen einer wässrigen Silikatlösung, b) Polykondensation des Silikats bis zu einer Teilchengröße von 3 bis 50 nm, c) Einstellen des erhaltenen Kieselsäuresols auf einen alkalischen pH-Wert, d) optional Einengen des Sols, e) Vermischen des Sols mit Bestandteilen der äußeren, fließfähigen Phase der Dispersion, und f) optional Entfernen von Wasser und/oder anderen Lösungsmittelbestandteilen aus der Dispersion. Als äußere fließfähige Phase werden Polyole, Polyamine, lineare oder verzweigte Polyglykolether, Polyester und Polylactone genannt. In den Beispielen wird ein Kieselsäuresol, dessen pH-Wert auf 10,5 bis 11 eingestellt wurde, mit Isopropanol vermischt und durch atmosphärische Destillation das Wasser bis auf einen Gehalt von < 0,1 % entfernt. Danach wurden verschiedene Polyether unter Rühren zugegeben. Anschließend wurden die flüchtigen Bestandteile destillativ bei 50 °C und im Vakuum entfernt. Erwähnt wird die Verwendung der Siliciumdioxid-Dispersionen zur Herstellung geschlossenzelliger oder offenzelliger Schaumstoffe auf Basis von Polyurethanen, Polysiloxanen, Polyolefinen oder Polystyrol. Die Sole weisen einen pH-Wert von 10 bis 12 auf und sind daher schwierig zu handhaben. Die Sole weisen nur eine geringe Konzentration an Siliciumdioxid-Partikeln (bis zu 15 Teile SiO₂-Partikel pro 100 Teile Sol) auf. Relativ große Mengen an Lösungsmittel sind erforderlich, was die Herstellung der Siliciumdioxid-Dispersionen verteuert.

EP-A 0 699 626 offenbart ein Verfahren zur Herstellung eines stabilen Siliciumdioxid-Propanol-Sols durch Ersetzen des wässrigen Mediums eines sauren wässrigen Siliciumdioxid-Sols durch Propanol, indem Propanol zu dem Siliciumdioxid-Sol zugefügt und das Sol destilliert wird, wobei auch noch Methanol zugegeben wird. Die Gegenwart von Polyol wird nicht erwähnt. Die Sole werden als Komponente in Beschichtungszusammensetzungen zur Herstellung harter und dünner Filme auf Linsen, Flaschen und Filmen aus synthetischen Harzen verwendet, wobei das kolloidale Siliciumdioxid als Mikrofüllstoff in dem gebildeten harten und dünnen Film fungiert.

WO 01/05883 offenbart ein Verfahren zur Herstellung von Polyurethanelastomeren mit nanoskaligen Füllstoffen. Es handelt sich ausschließlich um Polyester-basierte Elastomere. Als Ausgangsmaterial für die Herstellung von solchen Elastomeren wird Siliciumdioxid mit einem pH-Wert von 8-9 in Isopropanol verwendet.

WO 2004/035473 offenbart ein Verfahren zur Herstellung von silanisierten kolloidalen Siliciumdioxid-Dispersionen und deren Verwendung in Beschichtungszusammensetzungen oder als Additiv für Zementmaterialien. Dazu wird ein wässriges Silikasol vorzugsweise mit einem mit Wasser verdünnten Silan, insbesondere einem Epoxysilan, bei einem pH-Wert von vorzugsweise 6 bis 12 gemischt.

WO 2006/128793 betrifft ein Verfahren zur Herstellung von pulverförmigen kolloidalen Partikeln aus amorphem Siliciumdioxid. Dabei wird ein alkalisch stabilisiertes Silikasol mit einer Partikelgröße im Bereich von 8 bis 250 nm mit Wasser und/oder einem wasserlöslichen organischen Lösungsmittel verdünnt, ein Silan und/oder ein Polyol oder eine Dicarbonsäure hinzugegeben, das Sol mit einem Anionenaustauscher oder Kationenaustauscherharz entionisiert, das silylierte entionisierte Sol im Vakuum getrocknet und das getrocknete Sol optional zu einem feinen Pulver vermahlen. Das silylierte Siliciumdioxidpulver kann in der Polyol-Komponente oder in der Isocyanat-Komponente zur Herstellung von Polyurethanen dispergiert werden. Die Re-Dispergierung von Teilchen mit einer wesentlich niedrigeren Teilchengröße als 100 nm kann schwierig sein, da die Teilchen-Teilchen-Wechselwirkungen zu hoch sind, um agglomeratfreie Dispersionen, beispielsweise in Polylyol, zu erhalten. Die Handhabung des feinen Pulvers erfordert zudem Vorkehrungen zum Arbeitsschutz.

WO 2005/056174 betrifft ein Verfahren zur Herstellung eines Sols von Partikeln in einem organischen Medium, bei dem ein organisches Lösungsmittel zu einer Suspension der Partikel in wässrigem Medium zugegeben wird und Wasser zumindest teilweise abdestilliert wird. Anschließend wird ein Polymer zugegeben, welches weder mit Wasser noch mit dem organischen Lösungsmittel reagiert. Bei dem organischen Lösungsmittel kann es sich um Glykolether handeln, bei dem Polymer um Alkyl- oder Arylpolysiloxane, welche reaktive Gruppen wie Hydroxyl, Carboxyl, Isocyanat, Amin usw. aufweisen können. Gemäß Beispiel E wird Propylenglykolmethylether (Dowanol PM^{®}) zu einer wässrigen Lösung von kolloidalem Siliziumdioxid zugegeben und unter fortwährender Ergänzung des Propylenglykolethers Wasser abdestilliert. Anschließend wird ein Gemisch aus Tetraol-funktionellem Siloxan und n-Propylalkohol zugegeben. Schließlich wird noch Methylamylketon zugegeben und abdestilliert.

Aufgabe der Erfindung ist es, Dispersionen von Siliciumdioxid-Partikeln mit einem Durchmesser der Partikel von < 150 nm in Polyolen und Polyetheraminen bereitzustellen. Das Verfahren zur Herstellung der Silica-haltigen Dispersionen soll dabei ausgehend von kommerziell erhältlichen wasserbasierten Silicasolen durchgeführt werden können.

Die Aufgabe wird gelöst durch ein Verfahren zur Herstellung von Silica-haltigen Dispersionen enthaltend ein Polyetherol oder ein Polyetheramin, umfassend die Schritte, in der Reihenfolge (i) bis (iii),
(i) Versetzen eines wässrigen Kieselsols (K) mit einem mittleren Partikeldurchmesser von 1 bis 150 nm mit einem Gehalt an Silica, berechnet als SiO₂, von 1 bis 60 Gew.-% mit einem pH-Wert von 1 bis 6 mit mindestens einem Polyetherol (b1) und / oder Polyetheramin (b2) auf Basis von Ethylenoxid und/oder Propylenoxid mit einer mittleren OH- bzw. Amin-Funktionalität von 2 bis 6 und einem zahlenmittleren Molgewicht von 62 bis 6000 g/mol,
(ii) zumindest teilweises Abdestillieren des Wassers,
(iii) Versetzen der Dispersion mit mindestens einer Verbindung (S), die mindestens eine mindestens einfach alkoxylierte Silylgruppe und mindestens einen Alkyl-, Cycloalkyl- oder Aryl-Substituenten, der Heteroatome enthalten kann, aufweist, wobei dieser Substituent gegebenenfalls Gruppen aufweisen kann, die reaktiv gegenüber einem Alkohol, einem Amin oder einem Isocyanat sind, in einer Menge von 0,1 bis 20 µmol (S) pro m² Oberfläche von (K),
(iv) optional Einstellen des pH-Wertes der erhaltenen Silica-haltigen Dispersionen auf einen Wert von 7 bis 12 durch Zugabe einer basischen Verbindung,
wobei der Schritt (iv) auch zwischen den Schritten (ii) und (iii) durchgeführt werden kann.

Durch Einstellen des pH-Wertes des wässrigen Kieselsols (K) auf einen Wert von 1 bis 6 werden die Löslichkeitseigenschaften des wässrigen Kieselsols verändert.

Es wurde gefunden, dass Polyetherole und Polyetheramine auf Basis von Ethylenoxid und/oder Propylenoxid mit einer mittleren OH- bzw. Amin-Funktionalität von 2 bis 6 und einem zahlenmittleren Molgewicht von 62 bis 6000 g/mol eine ausreichend hohe Wasserlöslichkeit aufweisen. Somit ist die Gegenwart von löslichkeitsvermittelnden niedermolekularen organischen Lösungsmitteln wie Methanol, Ethanol, Propanolen, Butanolen, THF, 1,4-Dioxan, Dimethylformamid, Acetonitril, Dimethylsulfoxid oder Aceton , nicht erforderlich.

Die eingesetzten wässrigen kolloidalen Lösungen (K) von Polykieselsäureteilchen (Kieselsol) enthalten Teilchen mit einem mittleren Partikeldurchmesser von 1 bis 150 nm, bevorzugt 2 bis 120, besonders bevorzugt 3 bis 100, ganz besonders bevorzugt 4 bis 80, insbesondere 5 bis 50 und speziell 8 bis 40 nm.

Der Gehalt an Kieselsäure, berechnet als SiO₂, beträgt von 1 bis 60 Gew.-%, bevorzugt von 5 bis 55, besonders bevorzugt 10 bis 40 Gew.-%. Es sind auch Kieselsole mit einem geringeren Gehalt einsetzbar, jedoch muss der Mehrgehalt an Wasser dann in einem späteren Schritt destillativ abgetrennt werden.

Bei den wässrigen Lösungen (K) handelt es sich um kolloidale Lösungen von Polykieselsäure, die gegebenenfalls zu einem geringen Teil mit Alkalimetall-, Erdalkalimetall-, Ammonium-, Aluminium-, Eisen(II)-, Eisen(III)- und/oder Zirkoniumionen stabilisiert sein können, bevorzugt Alkalimetall-, Erdalkalimetall-, Ammonium- und/oder Eisen(III)ionen, besonders bevorzugt Alkalimetall-, Erdalkalimetall- und/oder Ammoniumionen, ganz besonders bevorzugt Alkalimetall- und/oder Erdalkalimetallionen und insbesondere Alkalimetallionen.

Unter den Alkalimetallionen sind Natrium- und/oder Kaliumionen bevorzugt, besonders bevorzugt sind Natriumionen.

Unter den Erdalkalimetallionen sind Magnesium-, Calcium- und/oder Berylliumionen bevorzugt, besonders bevorzugt sind Magnesium- und/oder Calciumionen, ganz besonders bevorzugt sind Magnesiumionen.

Das molare Verhältnis von Metallionen zu Siliciumatomen in (K) beträgt von 0:1 bis 0,1:1, bevorzugt von 0,002 bis 0,04 : 1.

Das eingesetzte Kieselsol (K) weist nach Einstellen des pH-Wertes einen pH-Wert der wässrigen Phase von 1 bis 6, bevorzugt von 2 bis 4 auf.

Unter einer wässrigen kolloidalen Lösung wird in dieser Schrift eine Lösung von gegebenenfalls stabilisierten Kieselsäurepartikeln mit einem mittleren Teilchendurchmesser zwischen 1 und 150 nm verstanden, die sich auch bei Lagerung über einen Zeitraum von einem Monat bei 20 °C nicht absetzen.

Unter einem Sol wird in dieser Schrift eine kolloiddisperse, inkohärente (d.h. jedes Teilchen ist frei beweglich) Lösung eines festen Stoffes in Wasser verstanden, hier als Kieselsol eine kolloiddisperse Lösung von Siliciumdioxid in Wasser.

Die erfindungsgemäß eingesetzten sauren wässrigen Kieselsole (K) können beispielsweise auf drei verschiedene Arten erhalten werden:
- durch Ansäuern der korrespondierenden alkalischen Kieselsole,
- durch Herstellung aus niedermolekularen Kieselsäuren, bevorzugt Wasserglas, d.h. salzartigen Teilchen mit einem Durchmesser unter 1 nm, oder
- durch Kondensation von Estern niedermolekularer Kieselsäuren.

Die wässrigen Lösungen von alkalischen Kieselsolen weisen in der Regel einen pH-Wert von 8 bis 12, bevorzugt von 8 bis 11 auf. Diese alkalischen Kieselsole sind kommerziell erhältlich und stellen mithin ein leicht verfügbares und bevorzugtes Ausgangsprodukt für das erfindungsgemäße Verfahren dar.

Die Teilchen in diesen alkalischen Kieselsolen weisen zumeist einen mittleren Partikeldurchmesser von 1 bis 150 nm, bevorzugt 2 bis 120 nm, besonders bevorzugt 3 bis 100 nm, ganz besonders bevorzugt 4 bis 80 nm, insbesondere 5 bis 50 nm und speziell 8 bis 40 nm auf.

Der Gehalt an Kieselsäure, berechnet als SiO₂, beträgt von 1 bis 60 Gew.-% , bevorzugt von 5 bis 55 Gew.-%, besonders bevorzugt 10 bis 40 Gew.-%. Es sind auch alkalische Kieselsole mit einem geringeren Feststoffgehalt einsetzbar, jedoch muss der Mehrgehalt an Wasser dann in einem späteren Schritt destillativ abgetrennt werden.

Die alkalischen Kieselsole können mit den oben genannten Metallionen stabilisiert sein.

Das molare Verhältnis von Metallionen zu Siliciumatomen in (K) beträgt von 0:1 bis 0,1:1, bevorzugt von 0,002 bis 0,04 : 1.

Der pH-Wert dieser alkalischen Kieselsole beträgt in der Regel mindestens 8, bevorzugt 8 bis 12, besonders bevorzugt 8 bis 11 und ganz besonders bevorzugt 8 bis 10.

Die Herstellung der erfindungsgemäß einzusetzenden Kieselsole (K) aus diesen alkalischen Kieselsolen erfolgt durch Einstellen des gewünschten pH-Wertes in diesen Kieselsolen, beispielsweise Zugabe von Mineralsäuren oder Versetzen der alkalischen Kieselsole mit einem Ionentauscher. Bevorzugt ist die Einstellung des pH-Wertes mit Ionenaustauschern, insbesondere dann, wenn das Kieselsol mit einem Polyetheramin versetzt wird.

Das Ansäuern kann mit beliebigen Säuren erfolgen, bevorzugt mit Salzsäure, Salpetersäure, Phosphorsäure, Schwefelsäure, Essigsäure, Ameisensäure, Methylsulfonsäure, para-Toluolsulfonsäure oder auch durch Versetzen mit einem sauren Ionentauscher, bevorzugt durch Ansäuern mit Salzsäure, Salpetersäure, Phosphorsäure, Schwefelsäure oder Essigsäure, besonders bevorzugt mit Salzsäure, Salpetersäure oder Schwefelsäure und ganz besonders bevorzugt durch Ansäuern mit Schwefelsäure.

Es stellt eine bevorzugte Ausführungsform dar, die Kieselsole (K) durch Versetzen von alkalischen Kieselsolen mit einem Ionentauscher herzustellen. Dies hat zur Folge, dass in den Kieselsolen (K) der Elektrolytgehalt niedrig ist, beispielsweise weniger als 0,2 Gew.-% beträgt und bevorzugt weniger als 0,1 Gew.-%.

Unter Elektrolyten werden hier andere anorganische ionische Bestandteile als Silikate, Hydroxide und Protonen verstanden. Diese vorwiegend aus der Stabilisierung der alkalischen Kieselsole stammenden Elektrolyte werden zur Stabilisierung der Partikel nach deren Herstellung zu der Suspension zugegeben.

Denkbar ist auch die Herstellung der Kieselsole (K) aus Wasserglas durch Ansäuern, beispielsweise mit einem Ionentauscher oder durch Versetzen mit Mineralsäure. Als Wasserglas wird dafür bevorzugt Kalium- und/oder Natriumsilikat eingesetzt, das besonders bevorzugt ein Verhältnis von 1 bis 10 mol SiO₂ zu 1 mol Alkalioxid, ganz besonders bevorzugt 1,5 bis 6 und insbesondere 2 bis 4 mol SiO₂ zu 1 mol Alkalioxid aufweist.

In diesem Fall lässt man das Reaktionsgemisch reagieren, bis sich ein Kieselsol (K) der gewünschten Größe gebildet hat, und fährt dann mit dem erfindungsgemäßen Verfahren fort.

Die niedermolekularen Kieselsäuren (Ortho- und Oligokieselsäure) sind normalerweise nur in hochverdünnten wässrigen Lösungen mit einem Gehalt von wenigen Gew.-% stabil und werden dafür in der Regel vor der Weiterverwendung aufkonzentriert.

Weiterhin kann die Herstellung der Kieselsole (K) durch Kondensation von Estern niedermolekularer Kieselsäuren erfolgen. Dabei handelt es sich meist um C₁- bis C₄-Al kyl-, besonders Ethylester von Oligo- und insbesondere Orthokieselsäure, die im sauren oder basischen Milien Kieselsole (K) bilden.

In dem Schritt (i) wird das wässrige saure Kieselsol mit der 0,001 bis 100-fachen, bevorzugt 0,01 bis 50-fachen, besonders bevorzugt 0,05 bis 30-fachen Menge bezogen auf die Menge des eingesetzten Kieselsols, an Polyetherol (b1) oder Polyetheramin (b2) versetzt. In der Regel beträgt dieses Mengenverhältnis von 0,1 bis 5. Es können auch Gemische aus Polyetherol (b1) und Polyetheramin (b2) eingesetzt werden. Optional wird vorher oder gleichzeitig mit Wasser verdünnt.

Geeignete Polyetherole (b1) weisen ein zahlenmittleres Molekulargewicht von 62 bis 6000 g/mol auf. Sie basieren auf Propylenoxid, Ethylenoxid oder Propylenoxid und Ethylenoxid.

Geeignete Polyetherole (b1) werden, ausgehend von einem Startermolekül, das 2 bis 6 reaktive Wasserstoffatome gebunden enthält, durch Polymerisation von Ethylenoxid und/oder Propylenoxid nach bekannten Verfahren hergestellt. Die Polymerisation kann als anionische Polymerisation mit Alkalihydroxiden oder Alkalialkoholaten als Katalysatoren, oder als kationische Polymerisation mit Lewis-Säuren, wie Antimonpentachlorid oder Borfluorid-Etherat durchgeführt werden. Weiter können als Katalysatoren auch Multimetallcyanidverbindungen, sogenannte DMC-Katalysatoren, eingesetzt werden. Auch tertiäre Amine können als Katalysator eingesetzt werden, z.B. Triethylamin, Tributylamine, Trimethylamine, Dimethylethanolamin oder Dimethylcyclohexylamin. Ethylenoxid und Propylenoxid können in Reinform, alternierend nacheinander, oder als Gemische polymerisiert werden.

Geeignete Startermoleküle mit 2 bis 6 reaktiven Wasserstoffatomen sind beispielsweise Wasser und 2- oder 3-wertige Alkohole, wie Ethylenglykol, 1,2- und 1,3-Propandiol, Diethylenglykol, Dipropylenglykol, 1,4-Butandiol, Glycerin, Trimethylolpropan, ferner Pentaerythritol, Sorbitol und Saccharose. Geeignete Startermoleküle sind weiterhin aminische Starter, wie Triethanolamine, Diethanolamine, Ethylendiamine und Toluendiamine.

Vorzugsweise weisen die Polyetherole (b1) eine OH-Zahl im Bereich von 100 bis 1825 auf.

Besonders bevorzugte Polyetherole (b1) sind ausgehend von 2- oder 3-wertigen Alkoholen, insbesondere Ethylenglykol, Trimethylolpropan oder Glycerin, hergestellt und sind Ethylenoxid-Homopolymere, Propylenoxid-Homopolymere oder Ethylenoxid/Propylenoxid-Copolymere. Diese besonders bevorzugten Polyetherole weisen ein Molekulargewicht von 62 bis 2000 g/mol und eine OH-Zahl von 100 bis 1825 auf.

Es können auch Gemische aus Polyetherolen (b1) eingesetzt werden.

Geeignete Polyetheramine (b2) leiten sich im Allgemeinen von den Polyetherolen (b1) durch Ersetzen der OH-Funktionen durch Amin-Funktionen in einem Aminierungsschritt ab. Dabei werden mindestens 50 % der OH-Gruppen durch Aminogruppen ersetzt. Vorzugsweise werden mindestens 75%, besonders bevorzugt im Wesentlichen alle OH-Gruppen durch Aminogruppen ersetzt. Vorzugsweise beträgt der Amingehalt (gesamt) der Polyetheramine (b2) 0,3 bis 15 meq/g, besonders bevorzugt 0,5 bis 10 meq/g.

Es können auch Gemische aus Polyetheraminen (b2) eingesetzt werden.

Es können auch Gemische aus Polyetherolen (b1) und Polyetheraminen (b2) eingesetzt werden.

In einem Schritt (ii) wird von dem in Schritt (i) erhaltenen Gemisch Wasser abdestilliert. Das Abdestillieren von Wasser erfolgt unter Normaldruck oder vermindertem Druck, bevorzugt bei 1 bis 800 mbar, besonders bevorzugt bei 5 bis 100 mbar.

Die Temperatur, bei der die Destillation erfolgt, richtet sich nach der Siedetemperatur von Wasser bei dem jeweiligen Druck. Bevorzugt beträgt die Temperatur nicht mehr als 140 °C, besonders bevorzugt nicht mehr als 100 °C.

Die Destillation kann diskontinuierlich, semikontinuierlich oder kontinuierlich erfolgen.

Beispielsweise kann sie diskontinuierlich aus einem Rührkessel erfolgen, dem gegebenenfalls eine kurze Rektifikationskolonne aufgesetzt sein kann.

Die Wärmezufuhr bei dem Rührkessel erfolgt über innen- und/oder außenliegende Wärmetauscher herkömmlicher Bauart und/oder Doppelwandheizung, vorzugsweise außenliegende Umlaufverdampfer mit Natur- oder Zwangsumlauf. Die Durchmischung des Reaktionsgemisches erfolgt auf bekannte Weise, z. B. durch Rühren, Umpumpen oder Naturumlauf.

Kontinuierlich erfolgt die Destillation bevorzugt durch Überleiten der Destillationsvorlage über einen Fallfilmverdampfer oder einen Wärmetauscher.

Als Destillationsapparat dafür geeignet sind sämtliche dem Fachmann bekannte Destillationsapparate, z.B. Umlaufverdampfer, Dünnfilmverdampfer, Fallfilmverdampfer, Wischblattverdampfer, gegebenenfalls jeweils mit aufgesetzten Rektifikationskolonnen sowie Strippkolonnen. Als Wärmetauscher geeignet sind beispielsweise Robert-Verdampfer oder Röhren- oder Plattenwärmetauscher.

Das in dem Kieselsol enthaltene Wasser wird in der Regel weitestgehend abdestilliert. Der Gehalt an Silikaten in der resultierenden Dispersion beträgt im Allgemeinen von 5 bis 60 Gew.-%, bevorzugt von 5 bis 50 Gew.-% und besonders bevorzugt von 10 bis 40 Gew.-%.

Der Restgehalt an Wasser in der Dispersion sollte weniger als 5 Gew.-% betragen, bevorzugt weniger als 3 Gew.-%, besonders bevorzugt weniger als 2 Gew.-%, ganz besonders bevorzugt weniger als 1 Gew.-%, insbesondere weniger als 0,5 Gew.-% und speziell weniger als 0,3 Gew.-% betragen.

Die Entfernung des Wassers kann anstelle der Destillation auch erfolgen durch Absorption, Pervaporation oder Diffusion über Membranen.

Erfindungsgemäß werden die Kieselsäurepartikel im Schritt (iii) durch Zugabe eines Silans (S) oberflächenmodifiziert. Das Silan (S) weist mindestens eine, bevorzugt genau eine mindestens einfach, beispielsweise ein- bis dreifach, bevorzugt zwei- bis dreifach, besonders bevorzugt genau dreifach alkoxylierte Silylgruppe auf. Zudem weist das Silan mindestens einen Alkyl-, Cycloalkyl- oder Aryl-Substituenten auf, wobei dieser Substituent gegebenenfalls Heteroatome aufweist, die reaktiv gegenüber einem Alkohol, einem Amin oder einem Isocyanat sein können.

Unter alkoxylierten Silylgruppen werden Gruppen

(R¹-O-)ₙ-Si-

verstanden, in denen
R¹ für C₁ bis C₂₀-Alkyl, bevorzugt C₁bis C₄-Alkyl und
n für eine ganze Zahl von 1 bis 3, bevorzugt 2 bis 3 und besonders bevorzugt für 3 steht.

Beispiele für C₁ bis C₂₀-Alkyl sind Methyl, Ethyl, *iso*-Propyl, n-Propyl, n-Butyl, *iso*-Butyl, *sek-*Butyl, *tert*-Butyl, n-Hexyl, n-Heptyl, n-Octyl, 2-Ethylhexyl, n-Decyl, n-Dodecyl, n-Tetradecyl, n-Hexadecyl, n-Octadecyl und n-Eicosyl.

Beispiele für C₁ bis C₄-Alkyl sind Methyl, Ethyl, *iso*-Propyl, n-Propyl, n-Butyl, *iso*-Butyl, *sek-*Butyl und *tert*-Butyl.

Bevorzugte Reste R¹ sind Methyl, Ethyl, n-Butyl und tert-Butyl, besonders bevorzugt Methyl und Ethyl.

Substituenten können sowohl reaktiv als auch unreaktiv gegenüber einem Alkohol, einem Amin oder einem Isocyanat sein. Die unreaktiven Sustituenten können Alkyl-, Cycloalkyl- oder Arylgruppen sein wie z.B. C₁ bis C₂₀-Alkyl z.B. Methyl, Ethyl, *iso*-Propyl, n-Propyl, n-Butyl, *iso*-Butyl, *sek*-Butyl, *tert*-Butyl, n-Hexyl, n-Heptyl, n-Octyl, 2-Ethylhexyl, n-Decyl, n-Dodecyl, n-Tetradecyl, n-Hexadecyl, n-Octadecyl, n-Eicosyl, Cyclohexyl und Phenyl.

Bevorzugte Verbindungen (S) sind Methyltrimethoxysilan, n-Propyltriethoxysilan, Dimethyldimethoxysilan, Phenyltrimethoxysilan, n-Octyltriethoxysilan, Isobutyltriethoxysilan, n-Butyltrimethoxysilan, t-Butyltrimethoxysilan, Methyltriethoxysilan, Benzyltriethoxysilan, Trimethylmethoxysilan, Vinyltrimethoxysilan, Vinyltriethoxysilan, Allyltrimethoxysilan, Allyltriethoxysilan, Butenyltriethoxysilan, n-Decyltriethoxysilan, Di-n-butyldimethoxysilan, Diisopropyldimethoxysilan, Dimethyldiethoxysilan, Dodecylmethyldiethoxysilan, Dodecyltriethoxysilan, Ethyltrimethoxysilan, Ethyltriethoxysilan, Hexadecyltriethoxysilan, Hexadecyltrimethoxysilan, Hexyltrimethoysilan, Hexyltriethoxysilan, Isobutylmethyltriethoxysilan, Isobutyltrimethoxysilan, n-Octadecyltriethoxysilan, n-Octadecyltrimethoxysilan, n-Octadecylmethyldimethoxysilan, n-Octadecylmethyldiethoxysilan, n-Octylmethyldiethoxysilan, Octyldimethylmethoxysilan, Pentyltriethoxysilan, Phenylmethyldimethoxysilan und Phenyltriethoxysilan.

Die unreaktiven Substituenten können auch Heteroatome aufweisen, z.B. Ether- und Thioethergruppen. Eine besondere Klasse dieser Substituenten sind monofunktionelle Polyoxyalkylen-Verbindungen z.B. auf Basis von Ethylenoxid und Propylenoxid.

Bevorzugte Verbindungen (S) sind 2-[Methoxy(polyethylenoxy)propyl]-trimethoxysilan, 3-Methoxypropyltrimethoxysilan, Bromphenyltrimethoxysilan, 3-Brompropyltrimethoxysilan, 2-Chlorethylmethyldimethoxysilan, (Heptadecafluoro-1,1,2,2-tetrahydrodecyl)triethoxysilan, (Heptadecafluoro-1,1,2,2-tetrahydrodecyl)trimethoxysilan, Diethylphosphatoethyltriethoxysilan, 2-(Diphenylphosphino)ethyl-triethoxysilan, 3-(N,N-Dimethylaminopropyl)trimethoxysilan, 3-Methoxypropyltrimethoxysilan, 3-(Methacryloxy)propyltrimethoxysilan, 3-Acryloxypropyltrimethoxysilan, 3-(Methacryloxy)propyltriethoxysilan, 3-(Methacryloxy)propylmethyldimethoxysilan.

Die reaktiven Gruppen sind durch vorzugsweise 1 bis 20 Kohlenstoffatome aufweisende Alkylen-, Cycloalkylen oder Arylengruppen, bevorzugt Alkylengruppen, als Spacergruppen mit den Silylgruppen verbunden.

Beispiele dafür sind Methylen, 1,2-Ethylen (-CH₂-CH₂-), 1,2-Propylen -CH(CH₃)-CH₂-) und/oder 1,3-Propylen (-CH₂-CH₂-CH₂-), 1,2-, 1,3- und/oder 1,4-Butylen, 1,1-Dimethyl-1,2-ethylen, 1,2-Dimethyl-1,2-ethylen, 1,6-Hexylen, 1,8-Octylen oder 1,10-Decylen, bevorzugt Methylen, 1,2-Ethylen, 1,2- oder 1,3-Propylen, 1,2-, 1,3- oder 1,4-Butylen, besonders bevorzugt Methylen, 1,2-Ethylen, 1,2- und/oder 1,3-Propylen und/oder 1,4-Butylen und ganz besonders bevorzugt Methylen, 1,2-Ethylen, 1,2- und/oder 1,3-Propylen.

Bevorzugte reaktive Gruppen sind eine primäre Aminogruppe, eine Hydroxylgruppe, eine Thiolgruppe und eine Epoxygruppe.

Bevorzugte Verbindungen (S) sind 2-(3,4-Epoxycyclohexyl)ethyltriethoxysilan, 2-(3,4-Epoxycyclohexyl)ethyltrimethoxysilan, 3-Aminopropylmethyldimethoxysilan, 3-Aminopropyldimethylmethoxysilan, 3-Aminopropyldimethylethoxysilan, N-(2'-Aminoethyl)-3-aminopropylmethyldimethoxysilan, N-(2'-Aminoethyl)-3-aminopropylmethyldiethoxysilan, N-(2'-Aminoethyl)-3-aminopropylmethoxysilan, N-(2'-Aminoethyl)-3-aminopropylethoxysilan, 3-Mercaptopropyltrimethoxysilan, 3-Mercaptopropyltriethoxysilan, 4-Aminobutyltriethoxysilan, 1-Amino-2-(dimethylethoxysilyl)propan, (Aminoethylaminoethyl)phenethyltrimethoxysilan, N-(2-Aminoethyl)-3-aminopropyltriethoxysilan, p-Aminophenyltrimethoxysilan, 3-Aminopropylmethyldiethoxysilan, 3-Aminopropyltriethoxysilan, 3-Aminopropyltrimethoxysilan, 11-Aminoundecyltriethoxysilan, (3-Glycidoxypropyl)trimethoxysilan, (3-Glycidoxypropyl)triethoxysilan, N-(Hydroxyethyl)-N-Methylaminopropyltrimethoxysilan, Hydroxymethyltriethoxysilan, 3-Mercaptopropylmethyldimethoxysilan, 3-Mercaptopropylmethyldiethoxysilan, N-Methylaminopropylmethyldimethoxysilan, Bis(2-hydroxyethyl)-3-aminopropyltriethoxysilan.

Besonders bevorzugte Verbindungen (S) sind Trialkoxysilane, welche mit den nachstehenden Gruppen substituiert sind:
- CH₂-CH₂-CH₂-NH₂
- CH₂-CH₂-CH₂-SH
- CH₂-CH₂-CH₂-NH-CH₂-CH₂-CH₂-NH₂
- CH₂-CH₂-CH₂-N(CH₂-CH₂OH)₂

Die genannten Gruppen reagieren mit Isocyanatgruppen und ergeben somit eine kovalente Bindung der Silikatpartikel an die PU-Matrix. Weiterhin bevorzugt sind Trialkoxysilane, welche mit einer Glycidoxypropylgruppe -CH₂-CH₂-CH₂-O-CH₂-CH(O)CH₂ substituiert sind. Die Epoxygruppe kann mit Aminogruppen, beispielsweise von monofunktionellen Polyetheraminen oder Hydroxylgruppen aufweisenden Komponenten, beispielsweise hyperverzweigten Polyolen, reagieren.

Auch kann man Silanverbindungen einsetzen, die zwei oder mehr Silangruppen enthalten. Solche Verbindungen sind beschrieben in z.B. WO2004/035649. Beispiele sind: Bis(3-methyldimethoxysilylpropyl)polypropylenoxid, Bis(triethoxysilyl)ethan, Bis(triethoxysilyl)octan, 1,6-Bis(trimethoxysilyl)hexan, Bis(methyldiethoxysilylpropyl)amin und Bis(triethoxysilylpropyl)amin.

Durch die Umsetzung mit der Verbindung (S) wird die Oberfläche des eingesetzten Kieselsols (K) so modifiziert, dass die Verträglichkeit zwischen dem ursprünglich polaren Kieselsol und dem Polyol verbessert wird. Durch Kombination von den verschiedenen Silanen, z.B. durch Kombination von reaktiven und unreaktiven Silanen, können bestimmte Effekte gezielt eingestellt werden. Es ist auch möglich, Gemische aus unterschiedlich modifizierten Silikateilchen einzusetzen.

Im Allgemeinen wird (S) in einer Menge von 0,1 bis 20 µmol pro m² Oberfläche von (K) eingesetzt.

Dies entspricht in der Regel einer Menge von 0,01 bis 5 mmol (S) pro Gramm (K), bevorzugt 0,05 bis 4 mmol (S) pro Gramm (K) und besonders bevorzugt 0,1 bis 3 mmol (S) pro Gramm (K).

Dazu erfolgt die Umsetzung mit (S) unter Rühren bei einer Temperatur von 10 bis 100 °C, bevorzugt von 20 bis 90, besonders bevorzugt von 30 bis 80 °C.

Unter diesen Reaktionsbedingungen lässt man 1 bis 48 Stunden, bevorzugt 3 bis 36 Stunden, besonders bevorzugt 4 bis 24 Stunden reagieren.

Das Silan (S) wird in Mengen von 0,1 bis 30 mol-% zugesetzt bevorzugt 0,3 bis 25 und besonders bevorzugt 0,5 bis 20 mol-% bezogen auf den SiO₂-Gehalt.

Das Silan (S) wird nach (i) Versetzen des Gemischs mit dem Polyetherol oder Polyetheramin und (ii) zumindest teilweisem Abdestillieren des in dem Kieselsol enthaltenen Wassers zugegeben. Wird das Silan (S) erst nach dem Destillationsschritt (ii) zugegeben, wird bevorzugt ein zweiter Destillationsschritt durchgeführt, in dem gegebenenfalls mit dem Silan eingebrachtes Lösungsmittel sowie weitere flüchtige Bestandteile entfernt werden.

In einem optionalen Schritt (iv) wird der pH-Wert des silikathaltigen Polyetherols auf einen Wert von 7 bis 12 eingestellt. Dies erfolgt durch Zugabe einer basischen Verbindung. Im Falle von Polyetheraminen ist eine solche pH-Änderung nicht erforderlich, da die Dispersionen bereits einen alkalischen pH-Wert aufweisen. Geeignete basische Verbindungen sind insbesondere stark basische Verbindungen wie Alkalihydroxide (NaOH, KOH, LiOH) und Alkalimetallalkoholate. Durch die Zugabe der basischen Verbindung kann die Reaktivität der Polyolkomponente erhöht werden. Dies wird darauf zurückgeführt, dass saure Silanolgruppen an der Oberfläche der Kieselsäurepartikel den Aminkatalysator adsorbieren können, wodurch die Reaktivität des Polyurethansystems herabgesetzt wird. Dem kann durch Zugabe einer basischen Verbindung entgegengewirkt werden.

Die Einstellung des pH-Wertes durch Zugabe einer basischen Verbindung kann auch vor Zugabe des Silans durchgeführt werden. In einer Ausführungsform des erfindungsgemäßen Verfahrens wird erst der pH-Wert auf einen Wert von 7 bis 12 eingestellt, gegebenenfalls mit der stark basischen Verbindung eingebrachtes Lösungsmittel zumindest teilweise abdestilliert, anschließend das Silan (S) zugegeben und flüchtige Bestandteile nach der Silanisierung abdestilliert. In einer weiteren Ausführungsform des erfindungsgemäßen Verfahrens wird erst das Silan (S) zugegeben, anschließend der pH-Wert durch Zugabe der stark basischen Verbindung auf einen Wert von 7 bis 12 eingestellt, und werden flüchtige Bestandteile nach der Silanisierung entfernt.

Die erfindungsgemäß hergestellten silikathaltigen Polyetherole oder Polyetheramine können als Polyolkomponente zur Herstellung von Polyurethanen eingesetzt werden. Das Einsatzgebiet der erfindungsgemäß hergestellten silikathaltigen Polyole oder Polyetheramine ist sehr breit. Beispielsweise können sie verwendet werden zur Herstellung von kompaktem Polyurethan, wie z.B. Adhesiven, Beschichtung, Bindemittel, Einkapselungsmitteln, thermoplastischen Polyurethanen und Elastomeren. Weiterhin können sie verwendet werden zur Herstellung von mikrozellulärem Polyurethanschaum, zum Beispiel für Schuhanwendungen, Strukturschaum, Integralschaum und RIM-Polyurethanen, beispielsweise für Stoßstangen. Ferner können sie verwendet werden zur Herstellung von Hochdichteschäumen, z.B. von Halbhartschaum und Hinterteppichschaum, Niedrigdichteschäumen, wie z.B. von Weichschaum, Hartschaum, Thermoformschaum und Verpackungsschaum.

Die erfindungsgemäßen silikathaltigen Polyetheramine können als Polyharnstoff-Komponente in Polyharnstoff-Anwendungen eingesetzt werden, beispielsweise in Polyharnstoff-Sprühanwendungen. Weiterhin können die Dispersionen in Epoxybeschichtungen oder in Reaktivsystemen, in denen ein Polycarbonat mit dem Polyetheramin reagiert, eingesetzt werden.

Die silikathaltigen Polyetherole können zur Herstellung von Polyurethanwerkstoffen verwendet werden. Die silikathaltigen Polyetheramine können zur Herstellung von Polyurethanwerkstoffen, Polyureawerkstoffen, Epoxywerkstoffen und Werkstoffen, die durch Umsetzung von Polycarbonaten mit Polyetheraminen erhältlich sind, verwendet werden.

Die Polyurethanwerkstoffe werden hergestellt, indem man a) organische Polyisocyanate mit b) Polyolen und/oder Polyetheraminen, enthaltend die silikathaltigen Polyethefole (b1) und/oder Polyetheramine (b2), gegebenenfalls c) Kettenverlängerungs- und/oder Vernetzungsmittel, d) Treibmittel, e) Katalysatoren und gegebenenfalls f) Hilfsmittel und Zusatzstoffe zu einer Reaktionsmischung vermischt und diese Reaktionsmischung ausreagieren lässt.

Die zur Herstellung der Polyurethanwerkstoffe verwendeten Polyisocyanate a) umfassen Verbindungen auf Basis von Methandiphenyldiisocyanat (im Folgenden als MDI bezeichnet), Toluoldiisocyanat, Isophorondiisocyanat, Naphthalindiisocyanat oder Hexamethylendiisocyanat. Unter MDI wird 2,4-MDI, 4,4'-MDI und höherkernige Homologe sowie Gemische daraus verstanden.

Das Polyisocyanat a) kann in Form von Polyisocyanatprepolymeren eingesetzt werden. Diese Polyisocyanatprepolymere sind erhältlich, indem vorstehend beschriebenes MDI, beispielsweise bei Temperaturen von 30 bis 100 °C, bevorzugt bei etwa 80 °C, mit Polyetherolen (b1) oder Polyesterolen (b3) oder poly-THF (pTHF) (b4) oder Gemischen daraus zum Prepolymer umgesetzt wird. Als Polyetherole (b1) werden vorzugsweise die vorstehend beschriebenen Polyetherole eingesetzt. Dabei können neben Polyisocyanatprepolymeren auf Polyetherbasis sowie Polyisocyanatprepolymeren auf Polyesterbasis auch deren Mischungen sowie Polyisocyanatprepolymere auf Basis von Polyethern und Polyestern eingesetzt werden. Der NCO-Gehalt der Prepolymere liegt dabei vorzugsweise z.B. für MDI-basierte Prepolymeren im Bereich von 2 % bis 30 %, besonders bevorzugt von 5 % bis 28% und insbesondere von 10 % bis 25 %.

Als Polyol-Komponente in der Herstellung von Prepolymeren können auch die Silicahaltigen Polyetherol- oder Polyetheramin-Dispersionen der Erfindung eingesetzt werden.

Gegebenenfalls werden den genannten Polyolen bei der Herstellung der Isocyanatprepolymere übliche Kettenverlängerer zugegeben. Solche Substanzen sind im Folgenden unter c) beschrieben.

Als zusätzliche Polyole oder Polyetheramine b) können die Polyetherole (b1) und/oder Polyetheramine (b2) eingesetzt werden, die auch für die Herstellung der Silica-haltigen Dispersionen eingesetzt werden. Zusätzlich können aber auch andere Polyetherole (b1) und Polyetheramine (b2) sowie Polyesterole (b3) und pTHF (b4) eingesetzt werden. Geeignete Polyole werden beschrieben in: The Polyurethane Book, Randall und Lee, Wiley 2002, Seite 99-112.

Beispielsweise können zusätzlich Polyesterole (b3) eingesetzt werden, die durch Kondensation von mehrfach funktionellen Alkoholen, vorzugsweise Diolen, mit 2 bis 12 Kohlenstoffatomen, vorzugsweise 2 bis 6 Kohlenstoffatomen, mit mehrfach funktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren, hergestellt werden. Geeignetes Polytetrahydrofuran (pTHF) (b4) weist im Allgemeinen ein Molekulargewicht von 550 bis 4000 g/mol, bevorzugt von 750 bis 2500 g/mol, besonders bevorzugt von 750 bis 1200 g/mol auf.

Als Kettenverlängerungsmittel c) werden Substanzen mit einem Molekulargewicht von vorzugsweise kleiner 600 g/mol, besonders bevorzugt von 56 bis 600 g/mol eingesetzt, wobei Kettenverlängerer 2 gegenüber Isocyanaten reaktive Wasserstoffatome aufweisen. Diese können einzeln oder bevorzugt in Form von Mischungen eingesetzt werden. Vorzugsweise werden Diole mit Molekulargewichten kleiner als 600, besonders bevorzugt von 60 bis 400 und insbesondere von 60 bis 300 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, Pentandiol, Tripropylenglykol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, und niedermolekulare hydroxylgruppenhaltige Polyalkylenoxide auf Basis Ethylen- und/oder 1,2-Propylenoxid und den vorgenannten Diolen als Startermoleküle. Besonders bevorzugt werden als Kettenverlängerer c Monoethylenglykol, Diethylenglykol, 2-Methyl-1,3-Propandiol, 1,4-Butandiol, 1,5-Pentandiol, 1,6- Hexandiol oder Mischungen davon eingesetzt.

Gegebenenfalls können neben Kettenverlängerungsmitteln auch Vernetzungsmittel eingesetzt werden. Dabei handelt es sich um Substanzen mit einem Molekulargewicht von kleiner 450 g/mol und 3 gegenüber Isocyanat reaktive Wasserstoffatome, beispielsweise um Triole, wie 1,2,4-, 1,3,5-Trihydroxycyclohexan, Glycerin und Trimethylolpropan oder niedermolekulare hydroxylgruppenhaltige Polyalkylenoxide auf Basis Ethylen- und/oder 1,2-Propylenoxid und den vorgenannten Triolen als Startermoleküle.

Sofern Kettenverlängerungsmittel c) Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) bis (f), zum Einsatz.

Ferner sind bei der Herstellung von Polyurethanschaumstoffen Treibmittel d) und/oder Wasser zugegen. Als Treibmittel d) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC.

Als Katalysatoren e) zur Herstellung der Polyurethanwerkstoffe werden bevorzugt Verbindungen verwendet, welche die Reaktion des Treibmittels mit den Isocyanatgruppen aufweisenden Verbindungen a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin, Pentamethyldiethylentriamin, Tetramethyldiaminoethylether, Harnstoff, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, w i e Triethanolamin, Triisopropanolamin, N-Methyl- und N-Ethyldiethanolamin und Dimethylethanolamin, N,N-Dimethylethanolamine, N,N-Dimethylcyclohexylamine, Bis(N,N-dimethylaminoethyl)ether, N,N,N',N',N"-Pentamethyldiethylenetriamine, 1,4-Diazabicyclo[2.2.2]octane, 2-(2-Dimethylaminoethoxy)ethanol, 2-((2-Dimethylaminoethoxy)ethylmethylamino)ethanol, 1-(Bis(3-dimethylamino)propyl)amino-2-propanol, N,N',N"Tris(3-dimethylaminopropyl)hexahydrotriazine, Dimorpholinodiethylether, N,N-Dimethylbenzylamin, N,N,N',N",N"-Pentamethyldipropylentriamin, N,N'-Diethylpiperazin. Ebenso kommen in Betracht organische Metallverbindungen, vorzugsweise organische Zinnverbindungen, wie Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B. Dibutylzinndiacetat, Dibutylzinndilaurat, Dibutylzinnmaleat, Dibutylzinnmercaptid und Dioctylzinndiacetat, sow i e Bismutcarboxylate, wie Bismut(III)-neodecanoat, Bismut-2-ethylhexanoat und Bismutoctanoat oder Mischungen davon, Phenylquecksilberpropionat, Bleioctoat, Kaliumacetat/octoat, Quarternäre Ammoniumformiate und Eisenacetylacetonat. Die organischen Metallverbindungen können allein oder vorzugsweise in Kombination mit stark basischen Aminen eingesetzt werden.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente a) bis c).

Der Reaktionsmischung zur Herstellung der Polyurethanwerkstoffe können gegebenenfalls auch noch Hilfsmittel und/oder Zusatzstoffe f) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Rizinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponenten a) bis c), eingesetzt.

Die Polyurethanwerkstoffe werden nach dem one-shot- oder Prepolymer-Verfahren mit Hilfe der Niederdruck- oder Hochdrucktechnik hergestellt. Die Schäume können als Blockschaum oder als Formschaum hergestellt werden. Diese Verfahrensweisen werden beispielsweise beschrieben in "The Polyurethanes Book" Randall and Lee, Eds, Wiley, 2002.

Die Erfindung wird durch die nachstehenden Beispiele näher erläutert.

### Beispiele

### A Transfer von nicht modifizierten Siliciumdioxid-Nanopartikeln in Polyole oder Polyetheramine und Herstellung von stabilen Siliciumdioxid-Dispersionen

### Beispiel A1:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 150 g Polyol 1 hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 40 Gew.-% erhalten.

### Beispiel A2:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 150 g Polyol 2 hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 40 Gew.-% erhalten.

### Beispiel A3:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 150 g Polyol 3 hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 40 Gew.-% erhalten.

### Beispiel A4:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 150 g Polyol 4 hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 40 Gew.-% erhalten.

### Beispiel A5:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 150 g Polyol 5 hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 40 Gew.-% erhalten.

### Beispiel A6:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 150 g Polyol 6 hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 40 Gew.-% erhalten.

### Beispiel A7:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 150 g Polyol 7 hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 40 Gew.-% erhalten.

### Beispiel A8:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 150 g Polyetheramin 1 unter intensivem Rühren hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 40 Gew.-% erhalten.

### Beispiel A9:

Zu 250 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) wurden 200 g Polyetheramin 2 unter intensivem Rühren hinzugegeben. Das Wasser wurde bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C betrug. Es wurde eine stabile, transparente Siliciumdioxid-Dispersion in dem Polyol mit einer Siliciumdioxid-Konzentration von 20 Gew.-% erhalten.

### Beispiel A10:

400 g eines kommerziell erhältlichen wässrigen Kieselsols (Levasil® 200/30% von H.C. Starck GmbH & Co KG, Leverkusen, Deutschland, Teilchendurchmesser basierend auf der BET-Methode: 15 nm, pH 9,0, Siliciumdioxid-Konzentration: 30 Gew.-%) wurden durch Zugabe von DOWEX^{®} MONOSPHERE^{®} 650C (H) Kationenaustauscherharz auf einen pH-Wert von 2,1 entionisiert. Nach Filtration wurden 333 g des entionisierten Kieselsols mit 150 g Polyol 1 gemischt. Das Wasser wurde unter verringertem Druck bei schrittweise von 30 °C bis 75 °C ansteigender Temperatur über einen Zeitraum von 6 Stunden entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 40 Gew.-% erhalten.

### Beispiel A11:

500 g eines kommerziell erhältlichen wässrigen Kieselsols (Levasil® 100/45% von H.C. Starck GmbH & Co KG, Leverkusen, Deutschland, Teilchendurchmesser basierend auf der BET-Methode: 30 nm, pH 10,0, Siliciumdioxid-Konzentration: 45 Gew.-%) wurden durch Zugabe von DOWEX^{®} MONOSPHERE^{®} 650C (H) Kationenaustauscherharz auf einen pH-Wert von 2,1 entionisiert. Nach Filtration wurden 444,4 g des entionisierten Kieselsols mit 300 g Polyol 3 gemischt. Das Wasser wurde unter verringertem Druck bei schrittweise von 30 °C bis 75 °C ansteigender Temperatur über einen Zeitraum von 6 Stunden entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 40 Gew.-% erhalten.

### Beispiel A12:

400 g eines kommerziell erhältlichen wässrigen Kieselsols (Levasil® 300/30% von H.C. Starck GmbH & Co KG, Leverkusen, Deutschland, Teilchendurchmesser basierend auf der BET-Methode: 9 nm, pH 10,0, Siliciumdioxid-Konzentration: 30 Gew.-%) wurden durch Zugabe von DOWEX^{®} MONOSPHERE^{®} 650C (H) Kationenaustauscherharz auf einen pH-Wert von 2,1 entionisiert. Nach Filtration wurden 333 g des entionisierten Kieselsols mit 150 g Polyol 1 gemischt. Das Wasser wurde unter verringertem Druck bei schrittweise von 30 °C bis 75 °C ansteigender Temperatur über einen Zeitraum von 5 Stunden entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 40 Gew.-% erhalten.

### Beispiel A13:

200 g eines kommerziell erhältlichen wässrigen Kieselsols (Levasil® 200/30% von H.C. Starck GmbH & Co KG, Leverkusen, Deutschland, Teilchendurchmesser basierend auf der BET-Methode: 15 nm, pH 9,0, Siliciumdioxid-Konzentration: 30 Gew.-%) wurden durch Zugabe von 5,8 g 10 %iger Schwefelsäure auf einen pH-Wert von 2,2 eingestellt und mit 240 g Polyol 1 gemischt. Das Wasser wurde unter verringertem Druck bei schrittweise von 30 °C bis 75 °C ansteigender Temperatur über einen Zeitraum von 4 Stunden entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 20 Gew.-% erhalten.

### B Oberflächenmodifizierung von Siliciumdioxid-Nanopartikeln in Polyetherolen und Polyetheraminen

Die Siliciumdioxidkonzentration der Dispersion nach Oberflächenmodifizierung bezieht sich auf reines Siliciumdioxid.

### Beispiel B1:

In einem mit einem Rührer ausgestattetem 1 L-Glaskolben wurden 262,5 g der Siliciumdioxid-Dispersion in Polyol 1 aus Beispiel A1 mit einer Siliciumdioxid-Konzentration von 40 Gew.-%, 37,5 g Polyol 1, 6,2 g (0,36 mol) Wasser und 15,7 g (0,2 mol) Methyltrimethoxysilan (von Merck Schuchardt OHG, Hohenbrunn, Deutschland) gemischt. Das erhaltene Gemisch wurde 24 Stunden lang bei 70 °C gerührt. Bei verringertem Druck bei 75 °C wurden flüchtige Bestandteile während eines Zeitraumes von 2 Stunden abdestilliert. Es wurde eine stabile, transparente Siliciumdioxid-Dispersion in dem Polyol mit einer Siliciumdioxid-Konzentration von 35 Gew.-% erhalten.

### Beispiel B2:

In einem mit einem Rührer ausgestattetem 1 L-Glaskolben wurden 225 g der Siliciumdioxid-Dispersion in Polyol 3 aus Beispiel A3 mit einer Siliciumdioxid-Konzentration von 40 Gew.-%, 75 g Polyol 3 und 26,5 g (0,12 mol) 3-Aminopropyltriethoxysilan (von Merck Schuchardt OHG, Hohenbrunn, Deutschland) gemischt. Das erhaltene Gemisch wurde 24 Stunden lang bei 70 °C gerührt. Bei verringertem Druck bei 75 °C wurden flüchtige Bestandteile während eines Zeitraumes von 2 Stunden abdestilliert. Es wurde eine stabile, transparente Siliciumdioxid-Dispersion in dem Polyol mit einer Siliciumdioxid-Konzentration von 30 Gew.-% wurde erhalten.

### Beispiel B3:

In einem mit einem Rührer ausgestatteten 1 L-Glaskolben wurden 500 g einer Siliciumdioxid-Dispersion in Polyetheramin 1 mit einer Siliciumdioxid-Konzentration von 40 Gew.-% aus Beispiel A8, 44,4 g (0,05 mol) Trimethoxysilan (erhältlich durch Umsetzung von 3-(2,3-Epoxypropoxy)propyltrimethoxysilan und Jeffamin XTJ-505) gemischt. Das resultierende Gemisch wurde 24 Stunden lang bei Raumtemperatur gerührt. Flüchtige Bestandteile wurden bei verringertem Druck bei 75 °C über einen Zeitraum von 2 Stunden abgetrennt, wobei eine stabile, transparente Siliciumdioxid-Dispersion in dem Polyetheramin mit einer Siliciumdioxid-Konzentration von 40 Gew.-% erhalten wurde. Zur Herstellung des Silans wurden 28,3 g (0,12 mol) 3-(2,3-Epoxypropoxy)propyltrimethoxysilan (von Merck Schuchardt OHG, Hohenbrunn, Deutschland) und 71,7 g (0,12 mol) Jeffamin XTJ-505 (von Huntsman) gemischt und über Nacht bei 60 °C gerührt.

### Beispiel B4:

In einem mit einem Rührer ausgestattetem 1 L-Glaskolben wurden 200 g der Siliciumdioxid-Dispersion in Polyol 2 aus Beispiel A2 mit einer Siliciumdioxid-Konzentration von 40 Gew.-%, 200 g Polyol 2, und 11,9 g (0,09 mol) Methyltrimethoxysilan (von Merck Schuchardt OHG, Hohenbrunn, Deutschland) gemischt. Das erhaltene Gemisch wurde 24 Stunden lang bei 70 °C gerührt. Bei verringertem Druck bei 75 °C wurden flüchtige Bestandteile während eines Zeitraumes von 2 Stunden abdestilliert. Es wurde eine stabile, transparente Siliciumdioxid-Dispersion in dem Polyol mit einer Siliciumdioxid-Konzentration von 20 Gew.-% erhalten.

### Beispiel B5:

In einem mit einem Rührer ausgestattetem 1 L-Glaskolben wurden 150 g eines kommerziell erhältlichen sauren wässrigen Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%), 45 g Polyol 1 und 4,5 g (0,03 mol) Methyltrimethoxysilan (von Merck Schuchardt OHG, Hohenbrunn, Deutschland) gemischt. Das erhaltene Gemisch wurde 24 Stunden lang bei Raumtemperatur gerührt. Wasser sowie weitere flüchtige Bestandteile wurden bei verringertem Druck und schrittweise von 30 °C auf 75 °C ansteigender Temperatur über einen Zeitraum von 4 Stunden destillativ entfernt, wobei die Temperatur in den letzten 1 bis 2 Stunden 75 °C betrug. Es wurde eine stabile, transparente Siliciumdioxid-Dispersion in dem Polyol mit einer Siliciumdioxid-Konzentration von 40 Gew.-% erhalten.

### C Mechanische Eigenschaften der mit den Siliciumdioxid-Nanopartikeln verstärkten Polyurethane und Polyharnstoff-Verbindungen

Die Herstellung von Proben für die mechanische Prüfung wurde mit in der Polyurethan-Industrie üblichen Verfahren durchgeführt. Die zur Herstellung der Polymermaterialien der Beispiele verwendeten Einsatzstoffe sind in Tabelle 4a-e wiedergegeben.

Das Isocyanat wurde zu dem gut durchmischten und homogenisierten Blend von Polyol mit Siliciumdioxid-Teilchen und anderen Einsatzstoffen der Polyurethan-Formulierung zugegeben. Die Formulierungen wurden (bis auf Beispiel C2) in eine offene Form gegossen, reagieren gelassen und bei 70 °C zu einer Platte mit den Abmessungen 200 x 150 x 2 mm ausgehärtet. Das erhaltene Material wurde bei 80 °C 2 Stunden lang getempert und die mechanischen Eigenschaften wurden an entsprechenden Probekörpern, welche aus dem mittleren Teil der Platte herausgeschnitten waren, bestimmt. Das fertige Polyurethan bzw. Polyurea enthielt bis zu 10 Gew.-% SiO₂. Die Messungen wurden mit den zur Prüfung von Polyurethan-Polymeren üblichen Testverfahren durchgeführt.

### Beispiel C1:

Zu 23,7 g der Siliciumdioxid-Dispersion aus Beispiel B1 wurden 26,0 g Polyol 1, 33,2 g Sovermol® 805 (ein ölbasiertes verzweigtes Polyether/esterpolyol mit einer OH-Zahl von 170) 0,33 g einer 33 gew.-%igen Lösung von 1,4-Diazabicyclo[2.2.2]octane in Triethylenglykol (Dabco® 33LV) und 8,29 g g K-Ca-Na-Zeolith-Paste zugegeben. Das erhaltene Gemisch wurde in einem Hochgeschwindigkeitsmischer 1 Minute lang gemischt und dann 30 Minuten bei Raumtemperatur belassen. 58,5 g Polymer-MDI mit einem NCO-Wert von 31,2 (Lupranat® M 20 S) wurden zugegeben und nach 1-minütigem Rühren in einem Hochgeschwindigkeitsmischer in eine offene Form gegossen, reagieren gelassen und bei 70 °C zu einer Platte mit den Abmessungen 200x150x2 mm ausgehärtet. Das erhaltene Material wurde bei 80 °C 2 Stunden lang getempert, und die mechanischen Eigenschaften wurden an entsprechenden Probekörpern, welche aus dem mittleren Teil der Platte herausgeschnitten waren, bestimmt. Die Ergebnisse sind in Tabelle 1 wiedergegeben.

**Tabelle 1:**

| Beispiel | C1 |
|---|---|
| Offene Zeit [min] | 6,0 |
| Dichte [g/cm³] | 1,060 |
| Shore-Härte D | 83 |
| Zugfestigkeit [MPa] | 57,9 |
| Reißdehnung [%] | 6 |
| Weiterreißwiderstand [kN/m] | 39,3 |
| Abrieb [mg] | 509 |
| E-Modul [MPa] | 2646 |

### Beispiel C2:

Zu 2723,3 g Polyetheramin D 2000 (ein Amin terminiertes Polyoxypropylendiol mit einem Molekulargewicht von 2000 g/mol und einer Gesamtaminzahl von 56,7 mg/g) wurden 937,9 g Diethyltoluoldiamin, 806,3 g der Siliciumdioxid-Dispersion aus Beispiel B3 und 268,8 g Polyetheramin 1 zugegeben. Das erhaltene Gemisch wurde in einem Laborrührer bei 500 rpm 1 Minute lang gemischt und homogenisiert und dann 30 Minuten bei Raumtemperatur belassen. Der Blend wurde im Volumenverhältnis 1 : 1 mit einem Isocyanat-Prepolymer basierend auf Lupranat MI (ein Gemisch aus 2,4'- und 4,4'-MDI) und Lupranol^{®} 1000 mit einem NCO-Wert von 15 % in einem Graco Reaktor E-10 gemischt und mit einer Graco Fusion AP-Pistole, welche mit einer AR2020 Mischkammer ausgestattet ist, auf ein mit einem Trennmittel behandeltes Stahlblech gesprüht. Die Temperatur des Blends betrug 70 °C, und der Verarbeitungsdruck lag zwischen 100 und 110 bar für beide Komponenten. Nach dem Aushärten wurde das aufgesprühte Elastomer von der Stahlplatte entfernt und eine Woche lang bei Raumtemperatur belassen. Die mechanischen Eigenschaften wurden an entsprechenden Probekörpern, welche aus der Platte herausgeschnitten waren, bestimmt. Die Ergebnisse sind in Tabelle 2 wiedergegeben.

**Tabelle 2:**

| Beispiel | C2 |
|---|---|
| Dichte [g/cm³] | 1,054 |
| Shore-Härte A | 92 |
| Zugfestigkeit [MPa] | 24 |
| Reißdehnung [%] | 430 |
| Weiterreißwiderstand [kN/m] | 56 |
| Abrieb [mg] | 150 |
| Entfammbarkeit (MVSS) | Selbstverlöschend |

### Beispiel C3:

Zu 37,3 g der Siliciumdioxid-Dispersion aus Beispiel B4 wurden 23,1 g Polyol 2, 2,21 g K-Ca-Na-Zeolith und 0,12 g Katalysator KX 324 (Katalysator vom Kaliumcarboxylat-Typ) zugegeben. Das erhaltene Gemisch wurde in einem Hochgeschwindigkeitsmischer 1 Minute lang gemischt und dann 30 Minuten bei Raumtemperatur belassen. 87,5 g Lupranat^{®} MM 103 (eine Uretonimin-modifizierte 4,4'-MDI-Variante mit einem NCO-Wert von 29,5%) wurden zugegeben und nach 1-minütigem Rühren in einem Hochgeschwindigkeitsmischer in eine offene Form gegossen, reagieren gelassen und bei 70 °C zu einer Platte mit den Abmessungen 200 x 150 x 2 mm ausgehärtet. Das erhaltene Material wurde bei 80 °C 2 Stunden lang getempert, und die mechanischen Eigenschaften wurden an entsprechenden Probekörpern, welche aus dem mittleren Teil der Platte herausgeschnitten waren, bestimmt. Die Ergebnisse sind in Tabelle 3 wiedergegeben.

**Tabelle 3:**

| Beispiel | C3 |
|---|---|
| Shore-Härte D | 82 |
| Zugfestigkeit [MPa] | 64 |
| Reißdehnung [%] | 24 |
| E-Modul [MPa] | 2004 |

### D Vergleichsbeispiele

### Beispiel D1:

100 g eines kommerziell erhältlichen wässrigen Kieselsols (Levasil® 200/30% von H.C. Starck GmbH & Co KG, Leverkusen, Deutschland, Teilchendurchmesser basierend auf der BET-Methode: 15 nm, pH 9,0, Siliciumdioxid-Konzentration: 30 Gew.-%) wurden mit 45 g Polyol 1 gemischt. Das Wasser wurde unter verringertem Druck bei schrittweise von 30 °C bis 75 °C ansteigender Temperatur entfernt, wobei während der Trocknung ein gelartiges Produkt erhalten wurde.

### Beispiel D2:

100 g eines kommerziell erhältlichen wässrigen Kieselsols (Levasil® 200/30% von H.C. Starck GmbH & Co KG, Leverkusen, Deutschland, Teilchendurchmesser basierend auf der BET-Methode: 15 nm, pH 9,0, Siliciumdioxid-Konzentration: 30 Gew.-%) wurden mit 270 g Polyol 1 gemischt, wobei sofort ein gelartiges Produkt erhalten wurde.

### Beispiel D3:

100 g eines kommerziell erhältlichen wässrigen Kieselsols (Levasil^{®} 200/30% von H.C. Starck GmbH & Co KG, Leverkusen, Deutschland, Teilchendurchmesser basierend auf der BET-Methode: 15 nm, pH 9,0, Siliciumdioxid-Konzentration: 30 Gew.-%) wurden mit 45 g Polyetheramin 1 gemischt. Das Wasser wurde unter verringertem Druck bei schrittweise von 30 °C bis 75 °C ansteigender Temperatur entfernt, wobei während der Trocknung ein gelartiges Produkt erhalten wurde.

### Beispiel D4:

100 g eines kommerziell erhältlichen wässrigen Kieselsols (Levasil^{®} 300/30% von H.C. Starck GmbH & Co KG, Leverkusen, Deutschland, Teilchendurchmesser basierend auf der BET-Methode: 9 nm, pH 10,0, Siliciumdioxid-Konzentration: 30 Gew.-%) wurden mit 120 g Polyol 1 gemischt, wobei sofort ein gelartiges Produkt erhalten wurde.

### Beispiel D5:

100 g eines kommerziell erhältlichen wässrigen Kieselsols (Levasil^{®} 300/30% von H.C. Starck GmbH & Co KG, Leverkusen, Deutschland, Teilchendurchmesser basierend auf der BET-Methode: 9 nm, pH 10,0, Siliciumdioxid-Konzentration: 30 Gew.-%) wurden mit 120 g Polyol 3 gemischt, wobei sofort ein gelartiges Produkt erhalten wurde.

### Beispiel D6:

100 g eines kommerziell erhältlichen wässrigen Kieselsols (Levasil^{®} 100/45% von H.C. Starck GmbH & Co KG, Leverkusen, Deutschland, Teilchendurchmesser basierend auf der BET-Methode: 30 nm, pH 10,0, Siliciumdioxid-Konzentration: 45 Gew.-%) wurden mit 180 g Polyol 1 gemischt, wobei sofort ein gelartiges Produkt erhalten wurde.

### Beispiel D7:

100 g eines kommerziell erhältlichen wässrigen Kieselsols (Levasil^{®} 100/45% von H.C. Starck GmbH & Co KG, Leverkusen, Deutschland, Teilchendurchmesser basierend auf der BET-Methode: 30 nm, pH 10,0, Siliciumdioxid-Konzentration: 45 Gew.-%) wurden mit 180 g Polyol 3 gemischt, wobei sofort ein gelartiges Produkt erhalten wurde.

### Einsatzstoffe:

**Tabelle 4a: Polyole**

| Polyol | Struktur | OH-Zahl |
|---|---|---|
| Polyol 1 | GLY - PO | 400 |
| Polyol 2 | TMP - EO | 250 |
| Polyol 3 | TMP - PO | 860 |
| Polyol 4 | MEG - EO | 190 |
| Polyol 5 | TMP - EO | 935 |
| Polyol 6 | GLY - PO | 805 |
| Polyol 7 | GLY | 1825 |

| | | |
|---|---|---|
| GLY = Glycerin, EO = Ethylenoxid, PO = Propylenoxid, MEG = Monoethylenglykol, TMP = Trimethylolpropan | | |

**Tabelle 4b: Polyetheramine (alle auf Basis von 100 % Propylenoxid)**

| Polyetheramin | Funktionalität | Molekulargewicht | Amin (gesamt) meq/g |
|---|---|---|---|
| Polyetheramin 1 | 2 | 430 | 4,4 |
| Polyetheramin 2 | 3 | 440 | 6,4 |

**Tabelle 4c: Isocyanate und Additive**

| Handelsname | Hersteller |
|---|---|
| Lupranat M 20 S | BASF |
| Lupranat MM 103 | BASF |
| Lupranat MI | BASF |
| Sovermol 805 | Cognis |
| DOWEX MONOSPERE 650 C (H) | Dow Corning |
| K-Ca-Na Zeolith-Paste | UOP |
| Dabco 33 LV | Air products |
| Catalyst KX 324 | BASF |
| Diethyltoluoldiamin | Albermarle |
| Jeffamin XTJ-505 | Huntsman |
| Lupranol 1000 | BASF |
| Polyetheramin D 2000 | BASF |

**Tabelle 4d: Kieselsole**

| Name | Hersteller | Teilchengröße (ca. nm) | SiO₂ (wt%) | Oberfläche (m²/g) | pH |
|---|---|---|---|---|---|
| Levasil 100/45% | H.C. Starck | 30 | 45 | 100 | 10,0 |
| Levasil 200/30% | H.C. Starck | 15 | 30 | 200 | 9,0 |
| Levasil 200E/20% | H.C. Starck | 15 | 20 | 200 | 2,5 |
| Levasil 300/30% | H.C. Starck | 9 | 30 | 300 | 10,0 |

**Tabelle 4e: Silane**

| Substanz | Hersteller | Formel | Molekular gewicht |
|---|---|---|---|
| Methyltrimethoxysilane | Merck | CH₃(CH₃O)₃Si | 136,22 |
| Aminopropyltriethoxysilane | Merck | NH₂C₃H₆(C₂H₅O)₃Si | 221,37 |
| 3-(2,3-Epoxypropoxy)propyltrimethoxysilan | Merck | CH₃(C₂H₂O)OC₃H₆(CH₃O)₃Si | 236,34 |

## Patentansprüche

1. Verfahren zur Herstellung von Silica-haltigen Dispersionen enthaltend ein Polyetherol oder ein Polyetheramin, umfassend die Schritte, in der Reihenfolge (i) bis (iii),
(i) Versetzen eines wässrigen Kieselsols (K) mit einem mittleren Partikeldurchmesser von 1 bis 150 nm mit einem Gehalt an Silica, berechnet als SiO₂, von 1 bis 60 Gew.-% mit einem pH-Wert von 1 bis 6 mit mindestens einem Polyetherol (b1) und / oder Polyetheramin (b2) auf Basis von Ethylenoxid und/oder Propylenoxid mit einer mittleren OH- bzw. Amin-Funktionalität von 2 bis 6 und einem zahlenmittleren Molekulargewicht von 62 bis 6000 g/mol,
(ii) zumindest teilweises Abdestillieren des Wassers,
(iii) Versetzen der Dispersion mit mindestens einer Verbindung (S), die mindestens eine mindestens einfach alkoxylierte Silylgruppe und mindestens einen Alkyl-, Cycloalkyl oder Aryl-Substituenten aufweist, wobei dieser Substituent gegebenenfalls Gruppen aufweisen kann, die reaktiv gegenüber einem Alkohol, einem Amin oder einem Isocyanat sind, in einer Menge von 0,1 bis 20 µmol (S) pro m² Oberfläche von (K),
(iv) optional Einstellen des pH-Wertes der erhaltenen Silica-haltigen Dispersionen auf einen Wert von 7 bis 12 durch Zugabe einer basischen Verbindung,
wobei der Schritt (iv) auch zwischen den Schritten (ii) und (iii) durchgeführt werden kann.

2. Verfahren nach Anspruch 1, **dadurch gekennzeichnet, dass** ein Polyetherol mit einer OH-Zahl von 100 bis 1825 eingesetzt wird.

3. Verfahren nach Anspruch 1 oder 2, **dadurch gekennzeichnet, dass** ein Polyetheramin mit einem Gesamt-Amingehalt von 0,3 bis 15 meq/g eingesetzt wird.

4. Verfahren nach einem der Ansprüche 1 bis 3, **dadurch gekennzeichnet, dass** die Verbindung (S) eine mindestens einfach alkoxylierte Silylgruppen
(R¹-O-)ₙ-Si-
aufweist, in denen
R¹ für C₁- bis C₂₀-Alkyl, und
n für eine ganze Zahl von 1 bis 3 steht.

5. Verfahren nach Anspruch 4, **dadurch gekennzeichnet, dass** R¹ C₁- bis C₄-Alkyl und n 2 oder 3 ist.

6. Verfahren nach einem der Ansprüche 1 bis 5, **dadurch gekennzeichnet, dass** die Verbindung (S) einen nicht reaktiven Alkyl-, Cycloalkyl- oder Arylsubstituenten aufweist, der Heteroatome enthalten kann.

7. Verfahren nach einem der Ansprüche 1 bis 5, **dadurch gekennzeichnet, dass** die Verbindung (S) einen Alkyl-, Cycloalkyl- oder Arylsubstituenten aufweist, der als reaktive Gruppen eine primäre Aminogruppe, Hydroxygruppe, Thiolgruppe oder Epoxygruppe enthält.

## Claims

1. A process for producing silica-comprising dispersions comprising a polyetherol or a polyether amine, which comprises the steps, in the sequence (i) to (iii), of
(i) admixing an aqueous silica sol (K) having an average particle diameter of from 1 to 150 nm and a silica content, calculated as SiO₂, of from 1 to 60% by weight and a pH of from 1 to 6 with at least one polyetherol (b1) and/or polyether amine (b2) based on ethylene oxide and/or propylene oxide and having an average OH or amine functionality of from 2 to 6 and a number average molecular weight of from 62 to 6000 g/mol,
(ii) distilling off at least part of the water,
(iii) admixing the dispersion with at least one compound (S) having at least one at least monoalkoxylated silyl group and at least one alkyl, cycloalkyl or aryl substituent, where this substituent may have groups which are reactive toward an alcohol, an amine or an isocyanate in an amount of from 0.1 to 20 µmol of (S) per m² of surface area of (K),
(iv) optionally adjusting the pH of the silica-comprising dispersions obtained to a value of from 7 to 12 by adding a basic compound,
where step (iv) can also be carried out between steps (ii) and (iii).

2. The process according to claim 1, wherein a polyetherol having an OH number of from 100 to 1825 is used.

3. The process according to claim 1 or 2, wherein a polyether amine having a total amine content of from 0.3 to 15 meq/g is used.

4. The process according to any of claims 1 to 3, wherein the compound (S) has an at least singly alkoxylated silyl group
(R¹-O-)ₙ-Si-
where
R¹ is C₁-C₂₀₋alkyl, and
n is an integer from 1 to 3.

5. The process according to claim 4, wherein R¹ is C₁-C₄-alkyl and n is 2 or 3.

6. The process according to any of claims 1 to 5, wherein the compound (S) has an unreactive alkyl, cycloalkyl or aryl substituent which can contain heteroatoms.

7. The process according to any of claims 1 to 5, wherein the compound (S) has an alkyl, cycloalkyl or aryl substituent comprising a primary amino group, hydroxyl group, thiol group or epoxy group as reactive group.

## Revendications

1. Procédé de fabrication de dispersions contenant de la silice, contenant un polyéthérol ou une polyétheramine, comprenant les étapes suivantes, dans l'ordre (i) à (iii) :
(i) le mélange d'un sol de silice aqueux (K) ayant un diamètre de particule moyen de 1 à 150 nm, ayant une teneur en silice, calculée en tant que SiO₂, de 1 à 60 % en poids, ayant un pH de 1 à 6, avec au moins un polyéthérol (b1) et/ou une polyétheramine (b2) à base d'oxyde d'éthylène et/ou d'oxyde de propylène, ayant une fonctionnalité OH ou amine moyenne de 2 à 6, et un poids moléculaire moyen en nombre de 62 à 6 000 g/mol,
(ii) l'élimination par distillation au moins partielle de l'eau,
(iii) le mélange de la dispersion avec au moins un composé (S), qui comprend au moins un groupe silyle au moins mono-alcoxylé et au moins un substituant alkyle, cycloalkyle ou aryle, ce substituant pouvant éventuellement comprendre des groupes qui sont réactifs vis-à-vis d'un alcool, d'une amine ou d'un isocyanate, en une quantité de 0,1 à 20 µmol de (S) par m² de surface de (K),
(iv) éventuellement l'ajustement du pH des dispersions contenant de la silice obtenues à une valeur de 7 à 12 par ajout d'un composé basique,
l'étape (iv) pouvant également être réalisée entre les étapes (ii) et (iii).

2. Procédé selon a revendication 1, **caractérisé en ce qu'**un polyéthérol ayant un indice OH de 100 à 1 825 est utilisé.

3. Procédé selon la revendication 1 ou 2, **caractérisé en ce qu'**une polyétheramine ayant une teneur en amine totale de 0,3 à 15 méq/g est utilisée.

4. Procédé selon l'une quelconque des revendications 1 à 3, **caractérisé en ce que** le composé (S) comprend un groupe silyle au moins mono-alcoxylé
(R¹-O-)ₙ-Si-
dans lequel
R¹ représente alkyle en C₁ à C₂₀ et
n représente un nombre entier de 1 à 3.

5. Procédé selon la revendication 4, **caractérisé en ce que** R¹ représente alkyle en C₁ à C₄ et n représente 2 ou 3.

6. Procédé selon l'une quelconque des revendications 1 à 5, **caractérisé en ce que** le composé (S) comprend un substituant alkyle, cycloalkyle ou aryle non réactif, qui peut contenir des hétéroatomes.

7. Procédé selon l'une quelconque des revendications 1 à 5, **caractérisé en ce que** le composé (S) comprend un substituant alkyle, cycloalkyle ou aryle, qui contient en tant que groupes réactifs un groupe amino primaire, un groupe hydroxyle, un groupe thiol ou un groupe époxy.
